# EUROPEAN PATENT SPECIFICATION

(11) **EP 2 577 510 B1**
(45) Date of publication and mention of the grant of the patent: **05.09.2018**
(21) Application number: 11726375.6
(22) Date of filing: 01.06.2011
(51) Int. Cl.: G06F 17/30

(54) **METHOD AND APPARATUS FOR QUERY REFORMULATION WITH LATENCY PRESERVATION**
VERFAHREN UND GERÄT ZUR QUERY NEUFORMULIERUNG MIT LATENZ PRESERVATION
PROCEDE ET APPAREIL D'INTERROGATION REFORMULATION AVEC LATENCE CONSERVATION

(30) Priority: 04.06.2010 US 794264
(43) Date of publication of application: 10.04.2013
(73) Proprietor: Telefonaktiebolaget LM Ericsson (publ), 164 83 Stockholm (SE)
(72) Inventor: MANZANO MACHO, David, E-28045 Madrid (ES); LAFUENTE ALVAREZ, Luis María, E-28047 Madrid (ES); PALLARES LÓPEZ, Miguel Ángel, E-28022 Madrid (ES); TORRES RAMÓN, Javier María, E-28015 Madrid (ES)
(74) Representative: Ericsson
(86) International application number: PCT/EP2011/059079
(87) International publication number: WO 2011/151391

(56) References cited:
- US-A1- 2010 030 768
- GUOLIANG LI ET AL: "Incremental Mining of Frequent Query Patterns from XML Queries for Caching", DATA MINING, 2006. ICDM '06. SIXTH INTERNATIONAL CONFERENCE ON, IEEE, PI, 1 December 2006 (2006-12-01), pages 350-361, XP031003045, ISBN: 978-0-7695-2701-7
- LOSCIO B F ET AL: "Query reformulation for an XML-based data integration system", PROCEEDINGS ACM SAC, XX, XX, vol. 1, 23 April 2006 (2006-04-23), pages 498-502, XP002458772,
- DMITRY BORODAENKO: "On-demand RDF to relational query translation in Samizdat RDF store", INTELLIGENT COMPUTING AND INTELLIGENT SYSTEMS, 2009. ICIS 2009. IEEE INTERNATIONAL CONFERENCE ON, IEEE, PISCATAWAY, NJ, USA, 20 November 2009 (2009-11-20), pages 413-417, XP031583450, ISBN: 978-1-4244-4754-1

## Description

### TECHNICAL FIELD

The present invention is related to a data scheme and protocol adapter which translates communications received from one or more application servers (FEs) into corresponding communications understandable by one or more repositories (BEs) and a corresponding method to carry out such translation. (As used herein, references to the "present invention" or "invention" relate to exemplary embodiments and not necessarily to every embodiment encompassed by the appended claims.)

### BACKGROUND

This section is intended to introduce the reader to various aspects of the art that may be related to various aspects of the present invention. The following discussion is intended to provide information to facilitate a better understanding of the present invention. Accordingly, it should be understood that statements in the following discussion are to be read in this light, and not as admissions of prior art.

In the Telco environment the data layered architecture is expected to become the deployment of choice for operators: data layered architecture splits current monolithic node architectures into a centralized repository (BEs) and a number of application servers (FEs) hosting the business logic.

3GPP TR 22.985: "Service requirement for the 3GPP User Data Convergence (Release 9)" has standardized, as part of Release 9, the concept of UDC (User Data Convergence) supporting a layered architecture, separating the data from the application logic in the 3GPP system, so that user data is stored in a logically unique repository allowing access from core and service layer entities, named application FEs. LDAP has been the protocol chosen in standardization for the interaction between FE and BE. A data model has not been standardized, but an information model.

3GPP TS 32.181: "User Data Convergence; Framework for Model Handling and Management" details the framework for model handling and management of the UDC. This framework considers the so-called options of integrated and separate data model handling. This framework assumes that the data model that a FE will make use of is configurable.

FEs are demanding for more flexible solutions allowing their integration with different BEs. Similarly, the BEs may need to be integrated with other applications apart from those they were initially designed for. Therefore FEs may rely on (source) data schemas and/or use (source) access protocols different from those (target) schemas and/or protocols offered by the BEs.

Moreover, the relationships between the source schemas and the target schema are typically given in the form of mappings between the corresponding schema elements.

Thus, a query issued by the FE has to be reformulated in terms of the target schema/protocol and the result has to be translated back according to the source schema/protocol.

In the Telco environment, the query transformation should be handled carefully in order to avoid excessive extra latencies (real time constraints).

There are several types of solutions for query reformulation:
- Materialized views: the query issued by the FE is transformed by means of query composition techniques into another query fitting the view. The response is also reformulated in terms of the source data model.
- XML views in data sources. This requires that both the application and database capable of processing XML as a language for data representation.

The main problems in relation to the query transformation for the telecom application are:
- Materialized views: the main drawback to this approach is that the known techniques are typically confined to the relational model, wherein the sources and the target must be relational and the queries must be SQL.
- XML views imply that either the database exposes its data in XML format or that the data set is exported in XML format.
- Views are often complex and the effort required in their design is considerable. Moreover, when there are several BEs it is not possible to rely on views implemented per database basis, since they might not fit the general view (which comprises elements stored in different databases).
- Some BEs do not provide view capabilities.
- On the other hand, and especially in the context of Telco applications, FEs often issue queries following a known-in-advance pattern. The same query patterns are usually triggered by the FE as a result of a network procedure (e.g. the HSS FE will always issue the same set of LDAP queries toward the BE whenever a network registration is being executed). This means that the same queries (at least when it comes to structure) are transformed several times in the same way introducing an undesired extra latency in the transformation process.
- The level of detail agreed so far in 3GPP for standardization of UDC is a partial solution to support multi-vendor integration. In particular: a data model has not been standardized, but an information model.
- The integrated and separate data model handling options defined by 3GPP introduce a need to consider flexibility in the configuration of data models in a FE, not only a BE having to support data views.

GUOLIANG LI ET AL: "Incremental Mining of Frequent Query Patterns from XML Queries for Caching",DATA MINING, 2006. ICDM '06. SIXTH INTERNATIONAL CONFERENCE ON, IEEE, PI, 1 December 2006, describes transformation of a user query, or XML query, into an XML query pattern, directed at a method for translating communications from Front-End servers into corresponding communications understandable by Back-End servers.

LOSCIO B F ET AL: "Query reformulation for an XML-based data integration system",PROCEEDINGS ACM SAC, XX, XX, vol. 1, 23 April 2006, describes receiving at a mediator a user query Q, translating and reformulating the user query Q into a set of local expressions producing local queries, obtaining answers for the local queries and translating the answers into XML, and integrating the XML answers in an integrated result R returned as the answer for the user query Q.

### SUMMARY

The present invention, in accordance with the subject-matter of the claims, pertains to a data scheme and protocol (DSP) adapter which translates communications received from one or more application servers (FEs) into corresponding communications understandable by one or more repositories (BEs). The DSP adapter comprises an interface unit which receives a FE query from a FE. The DSP adapter comprises a processing unit which determines an FE query pattern fulfilled by the FE query and checks whether the FE query pattern exists for the FE query in an accessible memory. Where the FE query pattern does not exist in the accessible memory, the processing unit transforms the FE query pattern into a corresponding BE query pattern. Where the FE query pattern exists in the accessible memory, the processing unit obtains the corresponding BE query pattern from the accessible memory.

In particular, this processing unit may submit to the accessible memory the FE query pattern to check whether the FE query pattern has been previously transformed into a BE query pattern or it is the first time the FE query pattern has to be transformed.

Where this submission takes place, if there is a transformation of the FE query pattern into a BE query pattern in the accessible memory, the processing unit may pass the BE query pattern to a query transformation module, otherwise the processing unit may transform the FE query pattern into the BE query pattern according to transformation rules derived from mappings between BE and FE data schemes, and may store in the accessible memory the FE query pattern together with the BE query pattern.

Complementary or alternatively to said submission, the processing unit may build up a corresponding BE query understandable by the BE by setting data, which fit the BE data scheme, into the BE query pattern. In this case, the processing unit may also translate the BE query into a corresponding DB access protocol by executing an outgoing query rewriting module. Complementary or alternatively to this translation, the processing unit may transform a BE response for the BE query into a corresponding FE response understandable by the FE.

Furthermore, the processing unit may check whether a BE response pattern for the BE response exists in the accessible memory and, where the BE response pattern does not exist in the accessible memory, the processing unit may transform the BE response pattern into a corresponding FE response pattern, and may store in the accessible memory the BE response pattern and the corresponding FE response pattern; or, where the BE response pattern exists in the accessible memory, the processing unit may obtain the corresponding FE response pattern from the accessible memory. Under this approach, the processing unit may build up the corresponding FE response by setting data, which fit the FE data scheme, into the FE response pattern.

The present invention pertains to a method for translating at a DSP adapter communications received from one or more FEs into corresponding communications understandable by one or more repositories BEs. The method comprises the steps of receiving at an interface unit a FE query from a FE. There is the step of determining an FE query pattern fulfilled by the FE query. There is the step of checking by a processing unit whether the FE query pattern exists for the FE query in an accessible memory. Where the FE query pattern does not exist in the accessible memory, there is the step of the processing unit transforming the FE query pattern into a corresponding BE query pattern. Where the FE query pattern exists in the accessible memory, there is the step of the processing unit obtaining the corresponding BE query pattern from the accessible memory.

This method may further include the step of submitting by the processing unit to the accessible memory the FE query pattern to check whether the FE query pattern has been previously transformed into a BE query pattern or it is the first time the FE query pattern has to be transformed. Particularly in this case, if there is a transformation of the FE query pattern into a BE query pattern in the accessible memory, the method may further include a step of the processing unit passing the BE query pattern to a query transformation module; otherwise the method may include a step of the processing unit transforming the FE query pattern into the BE query pattern according to transformation rules derived from mappings between BE and FE data schemes, and a step of storing in the accessible memory the FE query pattern together with the BE query pattern.

Complementary or alternatively to this step of submitting, the method may include the step of the processing unit building up a corresponding BE query understandable by the BE by setting data, which fit the BE data scheme, into the BE query pattern. Where this is the case, the method may further include the step of translating the BE query into a corresponding DB access protocol by the processing unit executing an outgoing query rewriting module; and the method may also include a step of receiving the BE data scheme from the BE. Complementary or alternatively to this step of translating, the method may include the step of transforming by the processing unit a BE response for the BE query into a corresponding FE response understandable by the FE.

In this case, the step of transforming the BE response into the corresponding FE response may include the steps of: determining a BE response pattern fulfilled by the BE response; checking whether the BE response pattern for the BE response exists in the accessible memory; and, where the BE response pattern does not exist in the accessible memory, transforming the BE response pattern into a corresponding FE response pattern, and storing the BE response pattern and the corresponding FE response pattern in the accessible memory, or, where the BE response pattern exists in the accessible memory, obtaining the corresponding FE response pattern from the accessible memory.

Moreover, the step of transforming the BE response into the corresponding FE response may include the step of building up the corresponding FE response by setting data, which fit the FE data scheme, into the FE response pattern. Where this is the case, the method may further include a step of receiving the FE data scheme from the FE.

### BRIEF DESCRIPTION OF THE DRAWINGS

The features, objects and advantages of the invention will become apparent by reading this description in conjunction with the accompanying drawings, in which:
Figure 1 is a block diagram of an exemplary Architecture of the DSP Adapter (hereinafter DSPA) of the present invention.
Figure 2 is an exemplary block diagram showing the FE, DSPA and BE.
Figure 3 is a block diagram of the prior art FE architecture.
Figure 4 is an exemplary block diagram of the FE architecture of the present invention.
Figure 5 shows a DSPA activities diagram.

### DETAILED DESCRIPTION

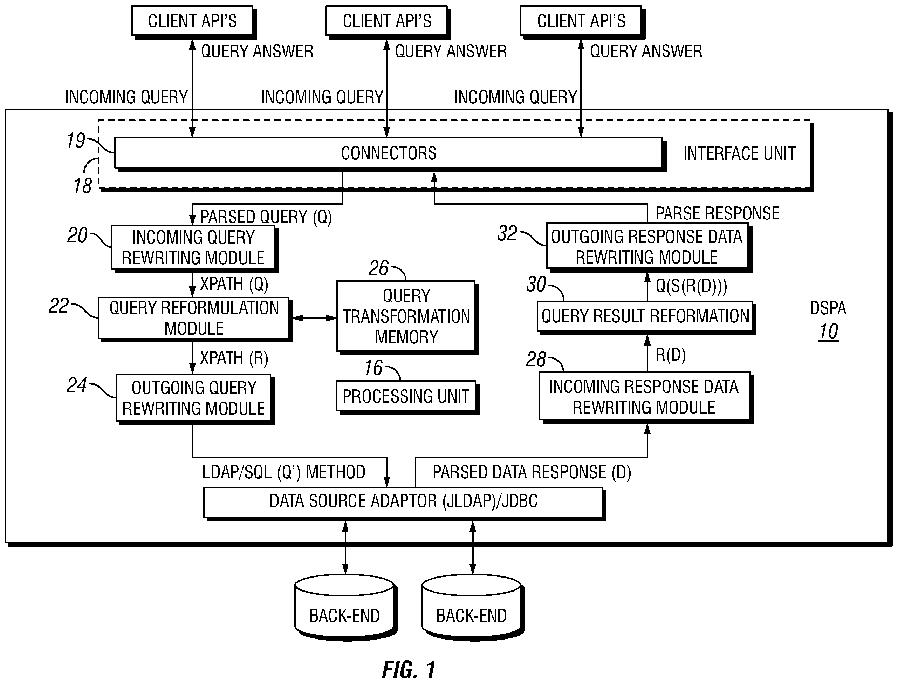

Referring now to the drawings wherein like reference numerals refer to similar or identical parts throughout the several views, and more specifically to figure 1 thereof, there is shown a data scheme and protocol (DSP) adapter 10 which translates communications received from one or more application servers (FEs 12) into corresponding communications understandable by one or more repositories (BEs 14). The DSP adapter 10 comprises an interface unit 18 which receives a FE 12 query from a FE 12. The DSP adapter 10 comprises a processing unit 16 which determines an FE query pattern fulfilled by the FE query and checks whether the FE 12 query pattern exists for the FE 12 query in an accessible memory, such as a Query Transformation memory 26. The accessible memory may be internally or externally positioned. Where the FE 12 query pattern does not exist in the accessible memory, the processing unit 16 transforms the FE 12 query pattern into a corresponding BE 14 query pattern. Where the FE 12 query pattern exists in the accessible memory, the processing unit 16 obtains the corresponding BE 14 query pattern from the accessible memory.

The processing unit 16 may submit to the accessible memory the FE 12 query pattern to check whether the FE 12 query pattern has been previously transformed into a BE 14 query pattern or it is the first time the FE 12 query pattern has to be transformed. If there is a transformation of the FE 12 query pattern into a BE 14 query pattern in the accessible memory, the processing unit 16 may pass the BE 14 query pattern to a query reformulation module 22, otherwise the processing unit 16 may transform the FE 12 query pattern into the BE 14 query pattern according to transformation rules derived from mappings between BE 14 and FE 12 data schemes, and stores in the accessible memory the FE 12 query pattern together with the BE 14 query pattern.

The processing unit 16 may build up a corresponding BE 14 query understandable by the BE 14 by setting data, which fit the BE 14 data scheme, into the BE 14 query pattern. The processing unit 16 may translate the BE 14 query into a corresponding DB access protocol by executing an outgoing query rewriting module 24. The processing unit 16 may transform a BE 14 response for the BE 14 query into a corresponding FE 12 response understandable by the FE 12. The processing unit 16 may check whether a BE 14 response pattern for the BE 14 response exists in the accessible memory, and where the BE 14 response pattern does not exist in the accessible memory, transforming the BE 14 response pattern into a corresponding FE 12 response pattern, and storing in the accessible memory the BE 14 response pattern and the corresponding FE 12 response pattern; or where the BE 14 response pattern exists in the accessible memory, obtaining the corresponding FE 12 response pattern from the accessible memory. The processing unit 16 may build up the corresponding FE 12 response by setting data, which fit the FE 12 data scheme, into the FE 12 response pattern.

The processing unit 16, by executing an incoming query rewriting module 20, may parse and translate the FE 12 query into an XPath expression. The processing unit 16, by executing the query reformulation module 22, may analyze the XPath expression to extract the FE 12 query pattern.

An incoming response data rewriting module 28 may collect results produced from the BE 14 and the processing unit 16 may transform the results into an XML document by executing the incoming response data rewriting module 28. A query result transformation module that is executed by the processing unit 16 may transform the XML document to produce a new XML file with results expressed according to the FE 12. The processing unit 16, by executing an outgoing response data rewriting module 32, may translate the XML file into a corresponding FE 12 protocol and send it back to the FE 12 through the interface.

The present invention pertains to a method for translating at a DSP adapter 10 communications received from one or more FEs 12 into corresponding communications understandable by one or more BEs 14. The method comprises the steps of receiving at an interface unit 18 a FE 12 query from a FE 12. There is the step of determining an FE query pattern fulfilled by the FE query. There is the step of checking by a processing unit 16 whether the FE 12 query pattern exists for the FE 12 query in an accessible memory. Where the FE 12 query pattern does not exist in the accessible memory, there is the step of the processing unit 16 transforming the FE 12 query pattern into a corresponding BE 14 query pattern. Where the FE 12 query pattern exists in the accessible memory, there is the step of the processing unit 16 obtaining the corresponding BE 14 query pattern from the accessible memory.

There may be the step of submitting by the processing unit 16 to the accessible memory the FE 12 query pattern to check whether the FE 12 query pattern has been previously transformed into a BE 14 query pattern or it is the first time the FE 12 query pattern has to be transformed. If there is a transformation of the FE 12 query pattern into a BE 14 query pattern in the accessible memory, the method may include a step of the processing unit 16 passing the BE 14 query pattern to a query reformulation module 22, otherwise the method may include a step of the processing unit 16 transforming the FE 12 query pattern into the BE 14 query pattern according to transformation rules derived from mappings between BE 14 and FE 12 data schemes, and a step of storing in the accessible memory the FE 12 query pattern together with the BE 14 query pattern.

There may be the step of the processing unit 16 building up a corresponding BE 14 query understandable by the BE 14 by setting data, which fit the BE 14 data scheme, into the BE 14 query pattern. There may be the step of translating the BE 14 query into a corresponding DB access protocol by the processing unit 16 executing an outgoing query rewriting module 24. There may be a step of transforming by the processing unit 16 a BE 14 response for the BE 14 query into a corresponding FE 12 response understandable by the FE 12.

The step of transforming the BE 14 response into the corresponding FE 12 response may include the steps of: determining a BE 14 response pattern fulfilled by the BE 14 response, checking whether the BE 14 response pattern for the BE 14 response exists in the accessible memory; and, where the BE 14 response pattern does not exist in the accessible memory, transforming the BE 14 response pattern into a corresponding FE 12 response pattern, and storing the BE 14 response pattern and the corresponding FE 12 response pattern in the accessible memory; or where the BE 14 response pattern exists in the accessible memory, obtaining the corresponding FE 12 response pattern from the accessible memory. The step of transforming the BE 14 response into the corresponding FE 12 response may include the step of building up the corresponding FE 12 response by setting data, which fit the FE 12 data scheme, into the FE 12 response pattern.

There may be the step of parsing and translating the FE 12 query into an XPath expression by the processing unit 16 executing an incoming query rewriting module 20. There may be the step of analyzing the XPath expression to extract the FE 12 query pattern by the processing unit 16 executing the query reformulation module 22.

There may be the steps of collecting results produced from the BE 14 by an incoming response data rewriting module 28 and transforming the results into an XML document by the processing unit 16 executing the incoming response data rewriting module 28. There may be the step of transforming the XML document with a query result transformation module that is executed by the processing unit 16 to produce a new XML file with results expressed according to the FE 12. There may be the steps of translating the XML file into a corresponding FE 12 protocol and sending back to the FE 12 through the interface by the processing unit 16 executing an outgoing response data rewriting module 32.

In the operation of the invention, there is a so-called Data Scheme and Protocol "DSP" adaptor 10 interposed between the one or more BE 14 and the one or more FE 12, the DSP adaptor arranged for caching a FE query pattern corresponding to any query received from the FE 12 and for caching the corresponding query understandable by the BE 14 , so that for any further FE query matching the FE query pattern the DSP adaptor is also arranged for finding in the cache the corresponding query understandable by the BE 14 without needs for transformation, but simply accommodating the particularly applicable BE data scheme.

The present invention thus provides for a method of translating at a DSP adaptor communications received from one or more FE 12 into corresponding communications understandable by one or more BE 14, the method comprising the steps of:
- determining a FE query pattern fulfilled by an FE-query originated in an FE 12, amongst one or more FE 12;
- checking whether the FE query pattern exists in a memory accessible to the DSP adaptor;
- where the FE query pattern does not exist in the memory:
   - translating the FE-query pattern into a corresponding BE-query pattern;
   - setting data, which fit the BE 14 data scheme, into the BE-query pattern to build up a corresponding BE-query understandable by a BE 14, amongst one or more BE 14;
   - storing the FE query pattern and the corresponding BE-query pattern in the memory accessible to the DSP adaptor; and
   - delivering the corresponding BE-query to the BE 14; or
- where the FE query pattern exists in the memory:
   - obtaining the corresponding BE-query pattern from the memory;
   - setting data, which fit the BE 14 data scheme, into the BE-query pattern to build up a corresponding BE-query understandable by a BE 14, amongst one or more BE 14;
   - delivering the corresponding BE-query to the BE 14.

This method may also be arranged for translating at the DSP adaptor those communications received from the one or more BE 14 into corresponding communications understandable by the one or more FE 12. To this end, the method may further comprise the steps of: obtaining a BE-response originated in the BE 14; transforming the BE-response into a corresponding FE-response understandable by the FE 12; and delivering the corresponding FE-response to the FE 12.

Advantageously in this method, the step of transforming the BE-response into the corresponding FE-response may include the steps of:
- determining a BE-response pattern fulfilled by the BE-response originated in a BE 14, amongst one or more BE 14;
- checking whether the BE-response pattern exists in the memory accessible to the DSP adaptor;
- where the BE-response pattern does not exist in the memory:
   - transforming the BE-response pattern into a corresponding FE-response pattern;
   - storing the BE-response pattern and the corresponding FE-response pattern in the memory accessible to the DSP adaptor; and
   - setting data, which fit the FE 12 data scheme, into the FE-response pattern to build up the corresponding FE-response understandable by an FE 12, amongst one or more FE 12; or
- where the BE-response pattern exists in the memory:
   - obtaining the corresponding FE-response pattern from the memory accessible to the DSP adaptor; and
   - setting data, which fit the FE 12 data scheme, into the FE-response pattern to build up a corresponding FE-response understandable by an FE 12, amongst one or more FE 12.

DSP adaptor provides a new functionality so that when application FE 12 provides a description of its data model with an embodied reference (e.g. tags) to the standardized or operator-specific information model elements, the logical middleware function is automatically generated reducing the TTM in the integration process. Such description might be provided directly from the FE 12 to the BE 14.

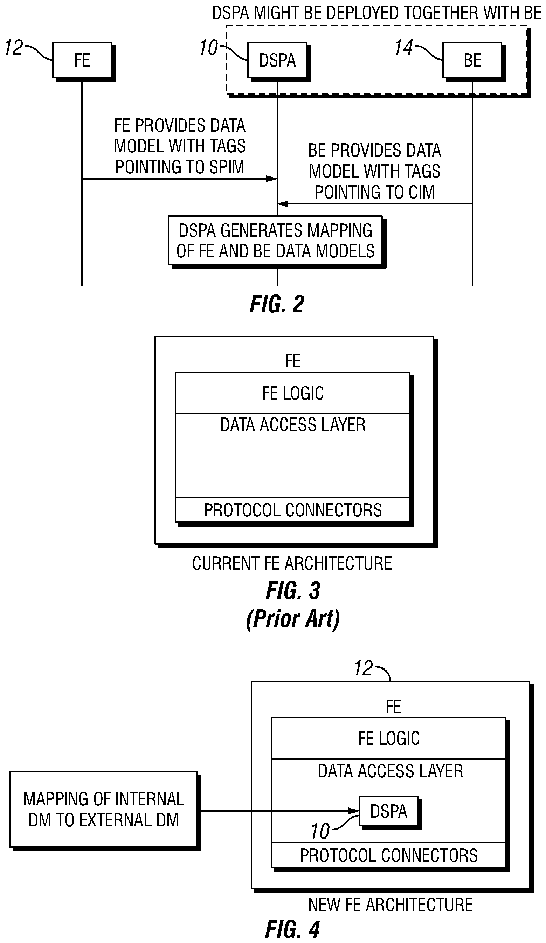

A more detailed view of the DSP adaptor invention is presented below and with reference to figures 1-4. Figure 1 is a block diagram of the Architecture of the DSP Adaptor (DSPA) of the present invention. Figure 2 is a block diagram showing the FE 12, DSPA and BE 14. Figure 3 is a block diagram of the prior art FE 12 architecture. Figure 4 is a block diagram of the FE 12 architecture of the present invention. The scenario is as follows: the applications (one or more FEs) that requires to communicate with their corresponding databases (one or more BEs 14), each of them (FEs and BEs) hosting its own data model.

DSPA includes a number of components arranged to operate as follows:
1. The FE 12 issues an incoming query which is expressed in a specific protocol. The query captured by the connector 19 is parsed (q) and translated into an XPath expression (Q) by the "Income Query Rewriting module".
2. The query (Q) is analyzed in order to detect the query pattern it follows by the "Query reformulation module 22".
3. This pattern is submitted to the "Query transformation memory 26" to check whether that query pattern has been previously transformed or it is the first time the query has to be transformed.
   a. In the first case, the transformation stored in the "Query transformation memory 26" pass through the next module.
   b. Otherwise, the query is transformed into one or more new patterns (R) (which may be expressed in e.g. XPath) according to the transformation rules detected by the analysis of the mappings between the data model schema of the target data model (BE 14) and the source data model (FE 12). The mappings may be expressed in XSLT.
4. The new generated pattern (R) is transformed again by setting data, which fit the BE 14 data scheme, into the BE-query pattern to build up a corresponding BE-query understandable by a BE 14 and afterwards it is translated into the corresponding DB access protocol (i.e. LDAP, SQL) by the "Outgoing query rewriting module 24".
5. The query is executed and the results (R(D)) are collected, and transformed into, for example, an XML document (DOM structure) by the "Incoming response data rewriting module 28".
6. The XML with the results passes through the transformation engine and may be transformed according to the XSLT. This produces a new XML file - S(R(D))) - with results expressed now according to the FE 12 data model. This is a direct process and it uses an XSLT engine (i.e. Xalan). This process is performed at the "Query result reformulation 30 module".
7. The pattern issued for the FE 12, together with the corresponding BE response pattern, is stored into the Query transformation memory 26 [same as above: accessible memory, internal or external].
8. Finally, the resultant XML file, or the like, is translated into the corresponding FE 12 protocol and sent back to the FE 12 by the "outgoing response data rewriting module 32".

The aforementioned XSLT, or the like, which describes the mappings between the target data model (BE 14) and the source data model (FE 12) can be provided:
1. Off-line. An administrator of the system provides in integration time such a mapping to the Data Access Enabler.
2. Online. Prior to actually sending traffic requests to a BE 14, a FE 12 provides its data model (e.g. expressed as an XML Schema), with additional tags that refer to the standardized Common Information Model or an operator-specific Specialized Information Model (SPIM). The BE 14 hosts an internal mapping of its own data model to the same information model. Based on this mapping, the DPS Adaptor automatically generates the XSLT, or the like, that maps from one information model to the other.

The aforementioned XSLT which exemplary describes the mappings between the target data model (BE 14) and the source data model (FE 12) can be deployed within an application FE 12. In order not to affect the FE 12 logic, the internal data model shall be respected, and the FE 12 shall integrate a data schema and protocol reformulation functionalities, being able to receive such mapping document, and/or integrate the same described functionality to automatically generate such a document.

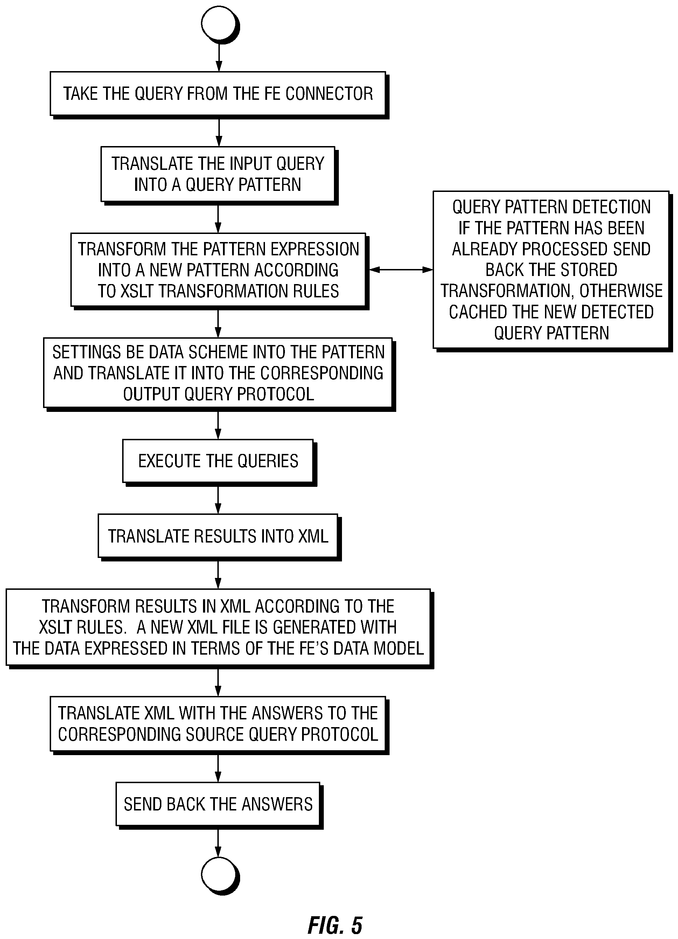

The activities that are performed by the DSPA are depicted in figure 5.

### Translation of the input query into XPath

In this step, the incoming query executed by the FE 12 is translated into an intermediate XML-based query language (i.e. XPath). In the case of being LDAP the protocol used by the FE 12, the translation process is herein detailed. An LDAP query may contain some or all of the following elements: a distinguish name (DN), a scope, a set of attributes and a set of filters. The translation from LDAP query to an XPath expression follows the next steps:
1. ProcessBaseDN. For each of the relative distinguished names (RDN) in the DN of the LDAP query a location an XPath expression is created. By default, each location path will have associated the "child" axis.
2. ProcessScope. The query scope defines the type of axis the last location path has. If the scope is baseObject, the last location path's axis will be "self', if it is oneLevel, the axis will be "child", and "descendant-or-self" in other case.
3. ProcessAttributes. For each attribute within the LDAP query, a new XPath expression will be created adding to each one an attribute (using the "attribute" axis).
4. ProcessFilters. A filter in LDAP is equivalent to an XPath expression. The processFilter incorporates each filter into the last location path of the generated XPath expression. If there are several filters, these are joined using the boolean operator "AND".

For example, consider the following LDAP query:

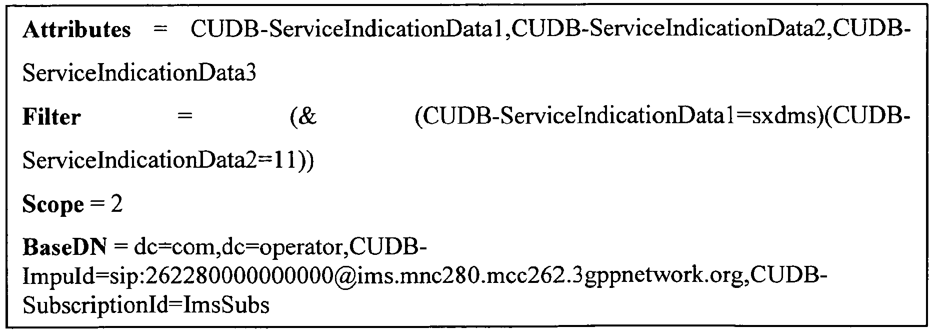

This query is transformed into the following tree XPath expressions (one for each of the attributes that appear in the LDAP query)
/child::dc[attribute::dc=com]/child::dc[attribute::dc=operator]/child::CUDB-ImpuId[attribute::CUDB-ImpuId=sip:262280000000000@ims.mnc280.mcc262.3gppnetwork.org]/child::CUDB-SubscriptionId[attribute::CUDB-SubscriptionId=ImsSubs]/descendant-or-self::*[attribute::CUDB-ServiceIndicationData1=sxdms and attribute: :CUDB-ServiceIndicationData2=11]/attribute::CUDB-ServiceIndicationData1|
/child::dc[attribute::dc=com]/child::dc[attribute::dc=operator]/child::CUDB-ImpuId[attribute::CUDB-ImpuId=sip:262280000000000@ims.mnc280.mcc262.3gppnetwork.org]/child::CUDB-SubscriptionId[attribute::CUDB-SubscriptionId=ImsSubs]/descendant-or-self::*[attribute::CUDB-ServiceIndicationData1=sxdms and attribute: :CUDB-ServiceIndicationData2=1]/attribute::CUDB-ServiceIndicationData2|
/child::dc[attribute::dc=com]/child::dc[attribute::dc=operator]/child::CUDB-ImpuId[attribute::CUDB-ImpuId=sip:262280000000000@ims.mnc280.mcc262.3gppnetwork.org]/child::CUDB-SubscriptionId[attribute::CUDB-SubscriptionId=ImsSubs]/descendant-or-self::*[attribute::CUDB-ServiceIndicationData1=sxdms and attribute::CUDB-ServiceIndicationData2=11]/attribute::CUDB-ServiceIndicationData3

The last location path in each expression contains each of the attributes and the previous location path contains the "descendant-or-self' axis (which is equivalent the "Whole Tree" scope in the aforementioned LDAP query) and the filters.
XSLT Processor: XPath transformation

This process gets the previously generated XPath expression(s) and aims to transform it into a new XPath expressions based on the XSLT rules.

This process is composed by tree steps:
1. The XPath expression is analyzed to detect the type of query pattern it follows. This pattern is compared with those already stored into the accessible memory. If the pattern is already in the memory, the previously generated transformation is used. Otherwise, the process passes through the subsequent steps.
2. Parse the XSLT mappings, or the like. A graph including several style sheet paths is created.

The final step is the transformation of the input XPath query into another one according to the XSLT rules.

### XPath pattern detection

The process of detecting the pattern that follows a particular XPath query is as follows:
1. From each of the location paths that constitute the XPath query is detected which elements are dependent on the data model and which not.
2. The elements of the query that are not related to the data model are replaced by wildcards thereby generating the corresponding query pattern.
3. This pattern is compared with the ones stored in the memory. If the pattern has been previously transformed, that transformation is taken directly from the memory. Otherwise, we proceed to its transformation through the next step.

### XSLT Transformation rules

The first step is to determine all the style sheet paths contained in the XSLT file. A style sheet path in this context is the set of input transformation rules (nodes within the XSLT structure that transform the input into the output).

In order to explain the process, it is necessary to take a careful look at section 2 of the publication by Sven Groppe, Stefan Böttcher, Georg Birkenheuer, André Hoing (2006). Reformulating XPath queries and XSLT queries on XSLT views. In Data & Knowledge Engineering 57 (2006) 64-110. For the sake of clarity, a part of this section is reproduced here.

According to the Definition 3, the authors define the successor node (in the XSLT structure) of a currently executed XSLT node N1 as those XSLT nodes N2 that will be the next executed in the call for the XSLT node N1 of the algorithm processXSLTNode (see Fig. 3) in line (21) or in line (23) of said publication.

Proposition 1: an XSLT node N2 is the successor XSLT node of an XSLT node N1, if:
- N2 is a child node of N1 in the XSLT stylesheet, or
- N1 is an XSLT node with an attribute xsl:use-attribute-sets=N and N2 is an XSLT node <xsl:attribute-set name=N> with the same N, or
- N1 is an XSLT node <xsl:call-template name=N> and N2 is an XSLT node <xsl:template name=N> with the same N, or
- N2 is <xsl:apply-templates select=I/> and N2 is <xsl:template match=M> and the template of N2 is called for at least one node of the selected node set I.
- Using the previous definition and proposition, the goal is to create paths. Each path goes from the root XSLT node down to a leaf node in the XSLT structure as the result of the application of the aforementioned successor definition. Thus, a path (or stylesheet path) is a possible transformation. In that sense, a path is the set of XSLT rules that have to be applied in order to transform an input XPath expression into a new XPath expression only in the case that the input expression fulfils the pre-conditions to fire out each rule belonging to the path. This process is part of the evaluation of the XPath expression that is explained underneath.

### XPath transformation according to the XSLT Transformation rules

Once DSPA has calculated the set of possible paths according to the provided XSLT file starts the transformation process. Basically, this process aims to find out the path that allows transforming the input expression into a new one. To do that, the input expression has to fulfill all the preconditions of the rules that belong to the path under evaluation. If not, a new path is selected until finding either that a path that allows to transform the whole input expression or that there is no path available to perform the transformation (this might mean that either the XSLT or the XPath expression are not well-defined). This process is called "evaluateXPath". DSPA implements the algorithm described in page 81 of the publication by Sven Groppe, Stefan Böttcher, Georg Birkenheuer, André Hoing (2006). Reformulating XPath queries and XSLT queries on XSLT views. In Data & Knowledge Engineering 57 (2006) 64-110, and the assistant function getNextOutputNode.

This process basically tries to find out the right path (included in the previously generated graph) to transform the XPath expression.

First of all, a graph that represents the XSLT structure is created. For doing so, the XSLT is parsed and the correspondent successors are added to the graph, by using the functions "getSuccesorsApplyTemplate"and "getSuccessors". The definition of successor has been presented in the previous section.

Creating the graph, some loops could be originated. This is the case of having an "apply-template" call inside of the template it's referencing to.

This graph will be used in order to translate one XPath expression into another, following the transformations defined in the XSLT. This process will be done within the function "evaluateXPath".

For this process two important arguments are needed: the graph that was mentioned before and represents the xsl transformations between the schemas and the XPath expression that is wanted to be transformed. This function returns a set of stylesheet paths (Definition 11 in the publication by Sven Groppe, Stefan Böttcher, Georg Birkenheuer, André Hoing (2006)) that represent the different paths that the input XPath expression can be transformed into, according to the given XSLT.

In order to implement this function, the idea expressed on the paper (page 68 in [1]) has been followed: The XPath expression is divided into several location paths. Then, each one of the tokens is passed as an argument to the function "evaluateXPath", together with the xslt graph. Iteratively, the paths that transform the different location paths are added to the final set of stylesheet paths.

In each iteration, first of all, the axis of the location path is checked:
- child: It searches for the next output element in each one of the stylesheet paths calculated so far.
- descendant-or-self: It looks for all the next output elements and returns all the possible paths that reach them.
- self: It searches for the next output element in each one of the stylesheet paths calculated so far.
- attribute: It searches for the next output attribute in each one of the stylesheet paths calculated so far.

At this point, the output elements have been included in the stylesheet path and now a new element is searched in the graph: the next "value-of' element, whose attribute "select" will define the translation of the last location path that has been taken and will be inserted as an attached path in the stylesheet path.

Once the path that corresponds to the last location path that has been introduced in the function, the predicates of this location path are analysed and introduced as filter paths in the currents stylesheet paths.

Once the list of stylesheet paths has been obtained, it is transformed into a list of XPath expressions by calling to the function "obtainXPath".

When doing so, the different nodes of the stylesheet paths are analysed. The idea is looking for output elements and checking the input values that correspond to them. Therefore, the following cases are taking into account:
- "Apply-templates" or "for-each" elements: The value of the attribute "select", that corresponds to the transformed XPath of that location path, is added to the resultant XPath expression.
- Attach path: The XPath expression that is contained in the attach path is joined to the previous one. As result, a new XPath expression is created. It will contain those elements that are common for both expressions (combining their predicates) and remaining elements from the new XPath. *e.g.: Having an XPath composed by two location paths "A[x*=*1]*/*B[y*=*2]" and being the XPath of the filter "A*/*B[z*=*3]*/*C*/*D", the final XPath will be composed of "A[x*=*1]*/*B[y*=*2 & z*=*3]*/*C*/*D".*
- Loop paths: If there is a loop, one or more location paths are added.
- In case the location path's axis is one of "xslt:child, xslt:self, xslt_descendant-or-self, xslt: descendant", only "descendant-or-self::node()" is added to the expression.
- In other case, the following list of location paths is inserted into the expression: "ancestor-or-self::node()/descendant-or-self::node()/self::node()/attribute::node()/namespace::node().
- Filter paths: The XPath expression that appears in the filter path is joined to the final XPath expression. As filter's expressions can represent an absolute path, introducing in this way duplicate elements, only those non-matching location paths will be added to the XPath that has been calculated so far. *e.g.: Having an XPath composed by two location paths "A*/*B" and being the XPath of the filter "A*/*B*/*C*/*D*", *just "C*/*D" will be added to the first path.*
- "value-of" element: The value of the attribute "select" that corresponds to the transformed XPath of that location path is added to the resultant XPath expression. As it happened before, a new XPath expression is created. It will contain those elements that are common for both expressions (combining their predicates) and remaining elements from the new XPath.

When all the location paths have been analysed, the new XPath expression is returned. This new Xpath that corresponds to the Xpath query pattern detected in the previous step is also submitted to the "Query transformation memory 26" and stored there.

### Xpath translation into the output protocol

In this step, the transformed Xpath query is translated into the corresponding BE 14 access protocol. Herein, the case of translating Xpath into LDAP is described as an example of this process. The same procedure could be extended to other protocols, such as SQL.

### XPath2LDAP

This process translates the transformed XPath expression (obtained as a result of the execution of the evaluateXPath function previously mentioned) into the LDAP protocol used by the backend. The implemented logic should be very similar to the one developed for the LDAP2XML conversion as long as the XPath expression contains the same axis that were used in the LDAP2XPath module.

As an example, the query presented for the LDAP to XPath translation looks like follows after being transformed using the evaluateXPath algorithm:

| |
|---|
| ```
 /child: :dc[attribute: :dc=com]/child: :dc[attribute: :dc=operator]/child: :ou[attribute::
 ou=identities]/child::dc[attribute::dc=impu]/child::IMPU[attribute::IMPU=sip:262
 280000000000@ims.mnc280.mcc262.3gppnetwork.org]/child::serv[attribute::serv
 =IMS]/descendant-or-self::ImsServProfId[attribute::ImsConfServProf=sxdms and
 attribute::ImsMaxSimultSess=11]/attribute::ImsConfServProf
``` |

This query is translated into the following LDAP query:
- Attributes = ImsConfServProf
- Filter = (ImsMaxSimultSess=11)(ImsConfServProf=sxdms)
- Scope = 2
- BaseDN = ImsServProfId=mainprofile0, serv=IMS
- IMPU=sip:262280000000000@ims.mnc280.mcc262.3gppnetwork.org
- dc=impu,ou=identities,dc=operator,dc=com.

### Query execution and exporting to XML the results

Once the query has been executed (using the corresponding connector 19) and its results have been collected, these have to be expressed by means of a XML document which conforms to the BE 14 XML schema.

### XSLT Processor XML Transformation

Using the previously generated XML file, this has to pass through the XSLT engine which directly produces a new XML file that contains the results of the query in terms of the FE 12 data model.

### Translate XML to source query protocol

Finally, the results in XML are translated into the corresponding formalism of the FE 12 connector 19. In case of being LDAP, this process is similar to the aforementioned example of translation from Xpath to LDAP.

### Send back the answers

The query, in the corresponding protocol, is sent back to the FE 12 containing the answers to the initial query.

**The main advantages of the invention are:**
- It only needs as input one description of the mapping between the BE 14 and FE 12 data model (XSLT). When the incoming query (XPath) has to be transformed (this means reformulated from the FE 12 data model to the BE 14 data model), this transformation is calculated using the corresponding mappings from the BE 14 to FE 12. No more XSLT files are needed.
- Besides, the invention does not need the availability of an XML view of the BE 14. The transformed query is directly executed using the corresponding protocol.
- The invention proposes a mechanism to latency preservation by means of the detection of query patterns and storing those patterns in a memory for future uses. This is especially relevant for the Telco applications that could have a great amount of queries but all of them correspond to a few set of query patterns.
- A deployment option of the data model mapping functionality within a FE 12, with the benefit that the internal FE 12 data model and logic are not affected.
- When the FE 12 and BE 14 data models are tagged with references to standardized or operator-specific information models, the automatic generation of the data model mapping functionality.

Although the invention has been described in detail in the foregoing embodiments for the purpose of illustration, it is to be understood that such detail is solely for that purpose and that variations can be made therein by those skilled in the art without departing from the scope of the invention except as it may be described by the following claims.

### Abbreviations

FE: Front-end
BE: Back-end
DSP: Data Scheme and Protocol
DSPA: Data Scheme and Protocol Adaptor

## Claims

1. A method for translating at a data scheme and protocol adapter, hereinafter DSP adapter, communications received from one or more Front-End, hereinafter FE, servers into corresponding communications understandable by one or more Back-End, hereinafter BE, repositories, the method comprising the steps of:
receiving at an interface unit an FE query from an FE server;
determining an FE query pattern fulfilled by the FE query;
checking by a processing unit whether the FE query pattern exists for the FE query in an accessible memory;
where the FE query pattern does not exist in the accessible memory, transforming the FE query pattern into a corresponding BE query pattern;
where the FE query pattern exists in the accessible memory, obtaining the corresponding BE query pattern from the accessible memory; and
building up by the processing unit a corresponding BE query understandable by a BE repository by setting data, which fit a BE data scheme, into the BE query pattern.

2. The method as claimed in claim 1 including the step of submitting by the processing unit to the accessible memory the FE query pattern to check whether the FE query pattern has been previously transformed into a BE query pattern or it is the first time the FE query pattern has to be transformed.

3. The method as claimed in claim 2 wherein, if there is a transformation of the FE query pattern into a BE query pattern in the accessible memory, the method includes a step of the processing unit passing the BE query pattern to a query transformation module, otherwise the method includes a step of the processing unit transforming the FE query pattern into the BE query pattern according to transformation rules derived from mappings between BE and FE data schemes, and a step of storing in the accessible memory the FE query pattern together with the BE query pattern.

4. The method as claimed in claim 1 including the step of translating the BE query into a corresponding DB access protocol by the processing unit executing an outgoing query rewriting module.

5. The method as claimed in claim 1 including a step of transforming by the processing unit a BE response for the BE query into a corresponding FE response understandable by the FE server.

6. The method as claimed in claim 5 wherein the step of transforming the BE response into the corresponding FE response includes the steps of: determining a BE response pattern fulfilled by the BE response, checking whether the BE response pattern for the BE response exists in the accessible memory, and
where the BE response pattern does not exist in the accessible memory, transforming the BE response pattern into a corresponding FE response pattern, and storing the BE response pattern and the corresponding FE response pattern in the accessible memory; or
where the BE response pattern exists in the accessible memory, obtaining the corresponding FE response pattern from the accessible memory.

7. The method as claimed in claim 6 wherein the step of transforming the BE response into the corresponding FE response includes the step of building up the corresponding FE response by setting data, which fit the FE data scheme, into the FE response pattern.

8. The method as claimed in claim 1 including a step of receiving the BE data scheme from the BE repository.

9. The method as claimed in claim 7 including a step of receiving the FE data scheme from the FE server.

10. A data scheme and protocol adapter, hereinafter DSP adapter, configured to translate communications received from one or more Front-End, hereinafter FE, servers into corresponding communications understandable by one or more Back-End, hereinafter BE, repositories, the DSP adapter comprising:
an interface unit configured to receive an FE query from an FE server;
a processing unit configured to determine an FE query pattern fulfilled by the FE query and to check whether the FE query pattern exists for the FE query in an accessible memory;
where the FE query pattern does not exist in the accessible memory, the processing unit configured to transform the FE query pattern into a corresponding BE query pattern;
where the FE query pattern exists in the accessible memory, the processing unit configured to obtain the corresponding BE query pattern from the accessible memory; and
the processing unit configured to build up a corresponding BE query understandable by a BE repository by setting data, which fit a BE data scheme, into the BE query pattern.

11. The DSP adapter as claimed in claim 10 wherein the processing unit is configured to submit to the accessible memory the FE query pattern in order to check whether the FE query pattern has been previously transformed into a BE query pattern or it is the first time the FE query pattern has to be transformed.

12. The DSP adapter as claimed in claim 11 wherein, if there is a transformation of the FE query pattern into a BE query pattern in the accessible memory, the processing unit is configured to pass the BE query pattern to a query transformation module; otherwise, the processing unit is configured to transform the FE query pattern into the BE query pattern according to transformation rules derived from mappings between BE and FE data schemes, and is configured to store in the accessible memory the FE query pattern together with the BE query pattern.

13. The DSP adapter as claimed in claim 10 wherein the processing unit is configured to translate the BE query into a corresponding DB access protocol by executing an outgoing query rewriting module.

14. The DSP adapter as claimed in claim 10 wherein the processing unit is configured to transform a BE response for the BE query into a corresponding FE response understandable by the FE server.

15. The DSP adapter as claimed in claim 14 wherein the processing unit is configured to check whether a BE response pattern for the BE response exists in the accessible memory, and
where the BE response pattern does not exist in the accessible memory, the processing unit is configured to transform the BE response pattern into a corresponding FE response pattern, and to store in the accessible memory the BE response pattern and the corresponding FE response pattern; and
where the BE response pattern exists in the accessible memory, the processing unit is configured to obtain the corresponding FE response pattern from the accessible memory.

16. The DSP adapter as claimed in claim 15 wherein the processing unit is configured to build up the corresponding FE response by setting data, which fit the FE data scheme, into the FE response pattern.

## Patentansprüche

1. Verfahren zur Übersetzung an einem Datenschema- und Protokolladapter, hierin im Folgenden DSP-Adapter, von Kommunikationen, die von einem oder mehreren Front-End, hierin im Folgenden FE,-Servern empfangen werden, in entsprechende Kommunikationen, die für ein oder mehrere Back-End, hierin im Folgenden BE,-Repositorys verständlich sind, wobei das Verfahren die folgenden Schritte umfasst:
Empfangen einer FE-Abfrage von einem FE-Server an einer Schnittstelleneinheit;
Bestimmen eines FE-Abfragemusters, dem die FE-Abfrage entspricht;
Prüfen durch eine Verarbeitungseinheit, ob das FE-Abfragemuster für die FE-Abfrage in einem zugreifbaren Speicher vorhanden ist;
Umwandeln des FE-Abfragemusters in ein entsprechendes BE-Abfragemusters, wenn das FE-Abfragemuster im zugreifbaren Speicher nicht vorhanden ist;
Abrufen des entsprechenden BE-Abfragemusters aus dem zugreifbaren Speicher, wenn das FE-Abfragemuster im zugreifbaren Speicher vorhanden ist; und
Erstellen durch die Verarbeitungseinheit einer entsprechenden BE-Abfrage, die für ein BE-Repository verständlich ist, durch Einsetzen von Daten, die einem BE-Datenschema entsprechen, in das BE-Abfragemuster.

2. Verfahren nach Anspruch 1, umfassend den Schritt des Übermittelns durch die Verarbeitungseinheit des FE-Abfragemusters an den zugreifbaren Speicher, um zu prüfen, ob das FE-Abfragemuster früher in ein BE-Abfragemuster umgewandelt wurde, oder es das erste Mal ist, dass das FE-Abfragemuster umgewandelt wurde.

3. Verfahren nach Anspruch 2, wobei das Verfahren, wenn eine Umwandlung des FE-Abfragemusters in ein BE-Abfragemuster im zugreifbaren Speicher vorhanden ist, einen Schritt der Verarbeitungseinheit des Weitergebens des BE-Abfragemusters an ein Abfrageumwandlungsmodul umfasst, das Verfahren andernfalls einen Schritt der Verarbeitungseinheit des Umwandelns des FE-Abfragemusters in das BE-Abfragemuster gemäß Umwandlungsregeln, die aus Zuordnungen zwischen BE- und FE-Datenschemata abgeleitet sind, und einen Schritt des Speicherns des FE-Abfragemusters zusammen mit dem BE-Abfragemuster im zugreifbaren Speicher umfasst.

4. Verfahren nach Anspruch 1, umfassend den Schritt des Übersetzens der BE-Abfrage in ein entsprechendes DB-Zugriffsprotokoll, indem die Verarbeitungseinheit ein Ausgangsabfrageumschreibmodul ausführt.

5. Verfahren nach Anspruch 1, umfassend einen Schritt des Umwandelns durch die Verarbeitungseinheit einer BE-Antwort für die BE-Abfrage in eine entsprechende FE-Antwort, die für den FE-Server verständlich ist.

6. Verfahren nach Anspruch 5, wobei der Schritt des Umwandelns der BE-Antwort in die entsprechende FE-Antwort die folgenden Schritte umfasst: Bestimmen eines BE-Antwortmusters, dem die BE-Antwort entspricht, Prüfen, ob das BE-Antwortmuster für die BE-Antwort im zugreifbaren Speicher vorhanden ist, und
Umwandeln, wenn das BE-Antwortmuster im zugreifbaren Speicher nicht vorhanden ist, des BE-Antwortmusters in ein entsprechendes FE-Antwortmuster und Speichern des BE-Antwortmusters und des entsprechenden FE-Antwortmusters im zugreifbaren Speicher; oder
Abrufen des entsprechenden FE-Antwortmusters aus dem zugreifbaren Speicher, wenn das BE-Antwortmuster im zugreifbaren Speicher vorhanden ist.

7. Verfahren nach Anspruch 6, wobei der Schritt des Umwandelns der BE-Antwort in die entsprechende FE-Antwort den Schritt des Erstellens der entsprechenden FE-Antwort durch Einsetzen von Daten, die dem FE-Datenschema entsprechen, in das FE-Antwortmuster umfasst.

8. Verfahren nach Anspruch 1, umfassend einen Schritt des Empfangens des BE-Datenschemas vom BE-Repository.

9. Verfahren nach Anspruch 7, umfassend einen Schritt des Empfangens des FE-Datenschemas vom FE-Server.

10. Datenschema- und Protokolladapter, hierin im Folgenden DSP-Adapter, der so konfiguriert ist, dass er Kommunikationen, die von einem oder mehreren Front-End, hierin im Folgenden FE,-Servern empfangen werden, in entsprechende Kommunikationen übersetzt, die für ein oder mehrere Back-End, hierin im Folgenden BE,-Repositorys verständlich sind, wobei der DSP-Adapter umfasst:
eine Schnittstelleneinheit, die zum Empfangen einer FE-Abfrage von einem FE-Server konfiguriert ist;
eine Verarbeitungseinheit, die so konfiguriert ist, dass sie ein FE-Abfragemuster bestimmt, dem die FE-Abfrage entspricht, und prüft, ob das FE-Abfragemuster für die FE-Abfrage in einem zugreifbaren Speicher vorhanden ist;
wobei die Verarbeitungseinheit so konfiguriert ist, dass sie das FE-Abfragemuster in ein entsprechendes BE-Abfragemusters umwandelt, wenn das FE-Abfragemuster im zugreifbaren Speicher nicht vorhanden ist;
die Verarbeitungseinheit so konfiguriert ist, dass sie das entsprechende BE-Abfragemusters aus dem zugreifbaren Speicher abruft, wenn das FE-Abfragemuster im zugreifbaren Speicher vorhanden ist; und
die Verarbeitungseinheit so konfiguriert ist, dass sie eine entsprechende BE-Abfrage, die für ein BE-Repository verständlich ist, durch Einsetzen von Daten, die einem BE-Datenschema entsprechen, in das BE-Abfragemuster erstellt.

11. DSP-Adapter nach Anspruch 10, wobei die Verarbeitungseinheit so konfiguriert ist, dass sie das FE-Abfragemuster an den zugreifbaren Speicher übermittelt, um zu prüfen, ob das FE-Abfragemuster früher in ein BE-Abfragemuster umgewandelt wurde, oder es das erste Mal ist, dass das FE-Abfragemuster umgewandelt wurde.

12. DSP-Adapter nach Anspruch 11, wobei die Verarbeitungseinheit so konfiguriert ist, dass sie, wenn eine Umwandlung des FE-Abfragemusters in ein BE-Abfragemuster im zugreifbaren Speicher vorhanden ist, das BE-Abfragemuster an ein Abfrageumwandlungsmodul weitergibt, die Verarbeitungseinheit andernfalls so konfiguriert ist, dass sie das FE-Abfragemuster gemäß Umwandlungsregeln, die aus Zuordnungen zwischen BE- und FE-Datenschemata abgeleitet sind, in das BE-Abfragemuster umwandelt, und so konfiguriert ist, dass sie das FE-Abfragemuster zusammen mit dem BE-Abfragemuster im zugreifbaren Speicher speichert.

13. DSP-Adapter nach Anspruch 10, wobei die Verarbeitungseinheit so konfiguriert ist, dass sie die BE-Abfrage in ein entsprechendes DB-Zugriffsprotokoll übersetzt, indem sie ein Ausgangsabfrageumschreibmodul ausführt.

14. DSP-Adapter nach Anspruch 10, wobei die Verarbeitungseinheit so konfiguriert ist, dass sie eine BE-Antwort für die BE-Abfrage in eine entsprechende FE-Antwort umwandelt, die für den FE-Server verständlich ist.

15. DSP-Adapter nach Anspruch 14, wobei die Verarbeitungseinheit so konfiguriert ist, dass sie prüft, ob ein BE-Antwortmuster für die BE-Antwort im zugreifbaren Speicher vorhanden ist, und
die Verarbeitungseinheit so konfiguriert ist, dass sie, wenn das BE-Antwortmuster im zugreifbaren Speicher nicht vorhanden ist, das BE-Antwortmuster in ein entsprechendes FE-Antwortmuster umwandelt und das BE-Antwortmuster und das entsprechende FE-Antwortmuster im zugreifbaren Speicher speichert; und
die Verarbeitungseinheit so konfiguriert ist, dass sie, wenn das BE-Antwortmuster im zugreifbaren Speicher vorhanden ist, das entsprechende FE-Antwortmuster aus dem zugreifbaren Speicher abruft.

16. DSP-Adapter nach Anspruch 15, wobei die Verarbeitungseinheit so konfiguriert ist, dass sie die entsprechende FE-Antwort durch Einsetzen von Daten, die dem FE-Datenschema entsprechen, in das FE-Antwortmuster erstellt.

## Revendications

1. Procédé de traduction de communications d'adaptateur de protocole et de mécanisme de données, désigné ci-après adaptateur DSP, reçu depuis un ou plusieurs serveurs frontaux, désignés ci-après FE, en communications correspondantes compréhensibles par un ou plusieurs recueils dorsaux, désignés ci-après BE, le procédé comprenant les étapes consistant à :
recevoir au niveau d'une unité d'interface FE une interrogation FE provenant d'un serveur FE;
déterminer un modèle d'interrogation FE satisfait par l'interrogation FE ;
vérifier par une unité de traitement si le modèle d'interrogation FE existe pour l'interrogation FE dans une mémoire accessible ;
lorsque le modèle d'interrogation FE n'existe pas dans la mémoire accessible, transformer le modèle d'interrogation FE en un modèle d'interrogation BE correspondant ;
lorsque le modèle d'interrogation FE existe dans la mémoire accessible, obtenir le modèle d'interrogation BE correspondant dans la mémoire accessible ; et
construire par l'unité de traitement une interrogation BE correspondante compréhensible par un recueil BE en réglant des données, qui concordent avec un mécanisme de données, en le modèle d'interrogation BE.

2. Procédé selon la revendication 1 incluant l'étape de soumission par l'unité de traitement à la mémoire accessible du modèle d'interrogation FE pour déterminer si le modèle d'interrogation FE a été précédemment transformé en un modèle d'interrogation BE ou si c'est la première fois que le modèle d'interrogation FE doit être transformé.

3. Procédé selon la revendication 2, dans lequel, si il y a une transformation du modèle d'interrogation FE en un modèle d'interrogation BE dans la mémoire accessible, le procédé inclut une étape où l'unité de traitement fait passer le modèle d'interrogation BE à un module de transformation d'interrogation, sinon le procédé inclut une étape où l'unité de traitement transforme le modèle d'interrogation FE en le modèle d'interrogation BE selon des règles de transformation déduite des mises en correspondance entre des mécanismes de données BE et FE et une étape de mémorisation dans la mémoire accessible du modèle d'interrogation FE conjointement au modèle d'interrogation BE.

4. Procédé selon la revendication 1, incluant l'étape de traduction de l'interrogation BE en un protocole d'accès DB correspondant par l'unité de traitement exécutant un module de réécriture d'interrogation sortante.

5. Procédé selon la revendication 1, incluant une étape de transformation par l'unité de traitement d'une réponse BE pour l'interrogation BE en une réponse FE correspondante compréhensible par le serveur FE.

6. Procédé selon la revendication 5, dans lequel l'étape de transformation de la réponse BE en la réponse FE correspondante inclut les étapes consistant à :
déterminer une un modèle de réponse BE satisfait par la réponse BE, vérifier si le modèle de réponse BE pour la réponse BE existe dans la mémoire accessible et
lorsque le modèle de réponse BE n'existe pas dans la mémoire accessible, transformer le modèle de réponse BE en un modèle de réponse FE correspondant et mémoriser le modèle de réponse BE et le modèle de réponse FE correspondant dans la mémoire accessible ; ou
lorsque le modèle de réponse BE existe dans la mémoire accessible, obtenir le modèle de réponse FE correspondant de la mémoire accessible.

7. Procédé selon la revendication 6, dans lequel l'étape de transformation de la réponse BE en la réponse FE correspondante inclut l'étape de construction de la réponse FE correspondante en réglant des données, qui concordent avec le mécanisme de données FE, en le modèle de réponse FE.

8. Procédé selon la revendication 1 incluant une étape de réception du mécanisme de données BE à partir du recueil BE.

9. Procédé selon la revendication 7 incluant une étape de réception du mécanisme de données FE à partir du serveur FE.

10. Adaptateur de protocole et de mécanisme de données, désigné ci-après adaptateur DSP, configuré pour traduire des communications reçues depuis un ou plusieurs serveurs frontaux, désignés ci-après FE, en communications correspondantes compréhensibles par un ou plusieurs recueils dorsaux, désigné ci-après recueils BE, l'adaptateur DSP comprenant :
une unité d'interface configurée pour recevoir une interrogation FE provenant d'un serveur FE ;
une unité de traitement configurée pour déterminer un modèle d'interrogation FE satisfait par l'interrogation FE et vérifier si le modèle d'interrogation FE existe pour l'interrogation FE dans une mémoire accessible ;
lorsque le modèle d'interrogation FE n'existe pas dans la mémoire accessible, l'unité de traitement est configurée pour transformer le modèle d'interrogation FE en un modèle d'interrogation BE correspondant ;
lorsque le modèle d'interrogation FE existe dans la mémoire accessible, l'unité de traitement est configurée pour obtenir le modèle d'interrogation BE correspondant de la mémoire accessible ; et
l'unité de traitement configurée pour reconstruire une interrogation BE correspondante compréhensible par un recueil BE en réglant des données, qui concordent avec un mécanisme de données BE, dans le modèle d'interrogation BE.

11. Adaptateur DSP selon la revendication 10, dans lequel l'unité de traitement configuré pour soumettre à la mémoire accessible le modèle d'interrogation FE afin de vérifier si le modèle d'interrogation FE a été précédemment transformé en un modèle d'interrogation BE ou si c'est la première fois que le modèle d'interrogation FE doit être transformé.

12. Adaptateur DSP selon la revendication 11, dans lequel, si il y a une transformation du modèle d'interrogation FE à un modèle d'interrogation BE dans la mémoire accessible, l'unité de traitement est configurée pour faire passer le modèle d'interrogation BE à un module de transformation d'interrogation ; sinon, l'unité de traitement configuré pour transformer le modèle d'interrogation FE en le modèle d'interrogation BE selon les règles de transformation déduites des mises en correspondance entre des mécanismes de données BE et FE est configuré pour mémoriser dans la mémoire accessible le modèle d'interrogation FE conjointement au modèle d'interrogation BE.

13. Adaptateur DSP selon la revendication 10, dans lequel l'unité de traitement est configurée pour traduire l'interrogation BE en un protocole d'accès DB correspondant en exécutant un module de réécriture d'interrogation sortante.

14. Adaptateur DSP selon la revendication 10, dans lequel l'unité de traitement est configurée pour transformer une réponse BE pour l'interrogation BE en une réponse FE correspondante compréhensible par le serveur FE.

15. Adaptateur DSP selon la revendication 14, dans lequel l'unité de traitement est configurée pour vérifier si un modèle de réponse BE pour la réponse BE existe dans la mémoire accessible et
lorsque le modèle de réponse BE n'existe pas dans la mémoire accessible, l'unité de traitement est configurée pour transformer le modèle de réponse BE en un modèle de réponse FE correspondant et mémoriser dans la mémoire accessible le modèle de réponse BE et le modèle de réponse FE correspondant ; et
lorsque le modèle de réponse BE existe dans la mémoire accessible, l'unité de traitement est configurée pour obtenir le modèle de réponse FE correspondant de la mémoire accessible.

16. Adaptateur DSP selon la revendication 15, dans lequel l'unité de traitement est configurée pour construire la réponse FE correspondante en réglant des données, qui concordent avec le mécanisme de données FE, en le modèle de réponse FE.
